# FASCICULE DE BREVET EUROPEEN

(11) **EP 0 801 196 B1**
(45) Date de publication et mention de la délivrance du brevet: **20.12.2000**
(21) Numéro de dépôt: 97440033.5
(22) Date de dépôt: 08.04.1997
(51) Int. Cl.: E05C 9/18

(54) **Elément de ferrure pour porte, fenêtre ou analogue, notamment une gâche, destiné à être monté sur un profilé en aluminium ou pvc**
Beschlag für Tür, Fenster oder ähnlich, insbesondere ein Schliessblech, bestimmt für Montage auf einem Profil aus Aluminium oder PVC
Fitting for door, window or similar, in particular a striker, meant for mounting on an aluminium or PVC profile

(30) Priorité: 10.04.1996 FR 9604638
(43) Date de publication de la demande: 15.10.1997
(73) Titulaire: FERCO INTERNATIONAL Ferrures et Serrures de Bâtiment Société Anonyme, 57400 Sarrebourg (FR)
(72) Inventeur: Alvarez, Eric, 57870 Hommert (FR); Charton, Bruno, 10180 Saint Lye (FR)
(74) Mandataire: Rhein, Alain

(56) Documents cités:
- DE-A- 3 621 419
- DE-U- 9 212 670
- DE-U- 9 407 033
- DE-U- 9 412 070

## Description

L'invention a trait à un élément de ferrure, du type ferrure d'articulation ou de verrouillage, plus particulièrement une gâche, pour porte ou fenêtre dont le dormant et/ou l'ouvrant sont constitués par un assemblage de profilés, notamment en PVC, comportant, en feuillure, une rainure en « T », ledit élément de ferrure comportant une embase munie de moyens de fixation dans une telle rainure en « T », ces moyens de fixation étant complétés par des moyens d'accrochage destinés à coopérer avec un rebord d'accrochage se situant en feuillure d'un profilé.

La présente invention trouvera son application dans le domaine de la quincaillerie du bâtiment.

L'on conçoit de plus en plus de portes et fenêtres en profilés d'aluminium ou en matière synthétique, notamment en PVC, et il se pose souvent, dans ce cas d'espèce, le problème de la fixation d'éléments de ferrures d'articulation et de verrouillage sur de tels profilés qui, étant tubulaires, n'offrent, souvent, guère de résistance à des organes de fixation du type vis ou analogue. En outre, lorsqu'il s'agit de profilés en PVC, ces problèmes sont largement accrus en raison de la souplesse du matériau.

En fait, d'une manière usuelle, ces profilés comportent, en feuillure, une rainure en « T » dont on se sert, d'ores-et-déjà, pour assurer une meilleure liaison mécanique entre ces profilés et les éléments de ferrures, lesquels comportent des moyens de fixation, précisément destinés à coopérer avec cette rainure en « T ».

De tels moyens de fixation peuvent emprunter différentes formes de réalisation. Notamment, il est connu d'insérer, par coulissement et dans la partie large de la rainure, une lame métallique comportant des orifices taraudés avec lesquels sont amenées à coopérer des vis de fixation traversant l'élément de ferrure. Finalement, de telles lames de fixation jouent le rôle d'écrous.

L'on a encore imaginé d'équiper l'embase d'un élément de ferrure d'un sabot à même d'être inséré dans ladite rainure en « T » et comportant des moyens complémentaires qui, par exemple sous l'action d'une vis, viennent assurer la fixation et le serrage de cet élément de ferrure. Ainsi, ces moyens complémentaires peuvent se présenter sous forme d'un ou plusieurs doigts d'accrochage qui, en phase de montage et démontage de l'élément de ferrure, sont à même de s'escamoter dans ledit sabot et qui, au contraire, sous l'action d'une vis, peuvent venir s'accrocher sous les retours délimitant le passage au niveau de ladite rainure en « T ».

Si l'on se contente de tels moyens de fixation pour rendre solidaire du profilé l'élément de ferrure, notamment une gâche, celle-ci n'offre guère de résistance sous l'influence d'une force f communiquée, par exemple, par un organe de verrouillage. En effet, la rainure en « T » est souvent délimitée, sur un de ses côtés, par un simple prolongement de la paroi externe du profilé. Or, lorsque celui-ci est en PVC, ce prolongement de la paroi cède aisément sous cette force jusqu'à obtenir le déboîtement de la gâche.

A ce propos on connaît encore, par le document DE-U-94.12070 une gâche venant se fixer dans une rainure en « T » d'un profilé de cadre dormant, cette gâche comportant une embase munie de moyens de fixation dans ladite rainure et complétée par des moyens d'accrochage destinés à coopérer avec un rebord d'accrochage au niveau du profilé. En fait, ce rebord d'accrochage est défini, ici, par une des parois latérales délimitant la rainure en « T ».

Aussi, le fait d'appliquer sur cette gâche une force f sensiblement perpendiculaire au cadre dormant aura pour effet de faire pivoter les parois latérales de cette rainure en « T »et d'entraîner le déboîtement et l'extraction de la gâche.

En effet, on remarquera que le fait d'appliquer une telle force f conduit à appliquer à la gâche une force dont la composante est orientée perpendiculairement au plan de la rainure résultant du pivotement de cette gâche autour d'une des parois latérales et ayant tendance précisément à l'extraire de cette rainure en « T ».

Pour remédier à ce problème, l'on n'a eu d'autre solution, jusqu'à présent, que de compléter les moyens de fixation déjà relativement complexes par des organes de fixation du type vis, rivets ou analogues.

Finalement, l'on observe que le montage d'un tel élément de ferrure sur un profilé du type indiqué ci-dessus, est fastidieux et long. En effet, il convient d'agir sur une, voire plusieurs vis pour aboutir au résultat, sans compter, le cas échéant, les perçages qu'il convient d'effectuer au niveau du profilé pour la réception de cette ou ces vis.

En conséquence, la présente invention a eu pour objectif de trouver une solution aux problèmes précédemment cités et d'autoriser, finalement, un montage par clipage fiable d'un élément de ferrure sur un tel profilé notamment en PVC.

A cet effet, l'invention concerne un élément de ferrure d'articulation ou de verrouillage, plus particulièrement une gâche, pour porte ou fenêtre dont le dormant et/ou l'ouvrant sont constitués par un assemblage de profilés, notamment en PVC, comportant, en feuillure, une rainure en « T », ledit élément de ferrure comportant une embase munie de moyens de fixation dans une telle rainure en « T », ces moyens de fixation étant complétés par des moyens d'accrochage destinés à coopérer avec un rebord d'accrochage se situant en feuillure d'un profilé, caractérisé par le fait que les moyens d'accrochage se présentent sous forme d'un retour, parallèle à l'embase et se situant à l'extrémité libre d'un prolongement s'étendant perpendiculairement et en bordure arrière de cette embase, en position montée de l'élément de ferrure, ledit retour étant destiné à se positionner sous le rebord d'accrochage s'étendant parallèlement au fond de la rainure en « T » et dans une direction opposée à cette dernière.

Préférentiellement, le rebord d'accrochage est défini par un entaillage usiné dans une chambre raidisseur en feuillure d'un profilé et jouxtant la rainure en « T ».

Avantageusement, l'embase de cet élément de ferrure comporte des moyens de fixation par clipage dans la rainure en « T ».

Les avantages découlant de la présente invention consistent en ce que sous l'action d'une force sensiblement perpendiculaire à l'ouvrant ou au cadre dormant en feuillure duquel est monté l'élément de ferrure, celui-ci ne peut se désolidariser du profilé en raison des moyens d'accrochage venant coopérer avec le rebord d'accrochage défini au travers de l'entaillage usiné dans la chambre raidisseur dudit profilé.

Finalement, l'on constate que la conception selon l'invention permet d'envisager le montage par simple clipage de cet élément de ferrure sur ledit profilé. On notera, plus particulièrement à ce propos, que l'entaillage réalisé dans ce profilé peut être déterminé, dans ses dimensions, de telle sorte que les limites de cet entaillage assurent, en outre, un blocage en translation de l'élément de ferrure.

En fin de compte, la présente invention permet d'envisager la suppression des vis qui étaient indispensables, jusqu'à présent, pour empêcher le déboîtement d'un élément de ferrure de la rainure d'un profilé en PVC, sans compter que l'élément de ferrure, lorsqu'il s'agit d'une gâche par exemple, peut, elle aussi, être conçue en matière synthétique.

L'invention sera mieux comprise à la lecture de la description qui va suivre se rapportant à un exemple de réalisation illustré dans le dessin joint en annexe.
- la figure 1 est une vue schématisée et en coupe du profilé, notamment d'un dormant de porte, fenêtre ou analogue, recevant un élément de ferrure conforme à l'invention ;
- la figure 2 est une vue schématisée et en plan de cet élément de ferrure, sous forme d'une gâche, monté sur un profilé comportant une rainure en « T ».

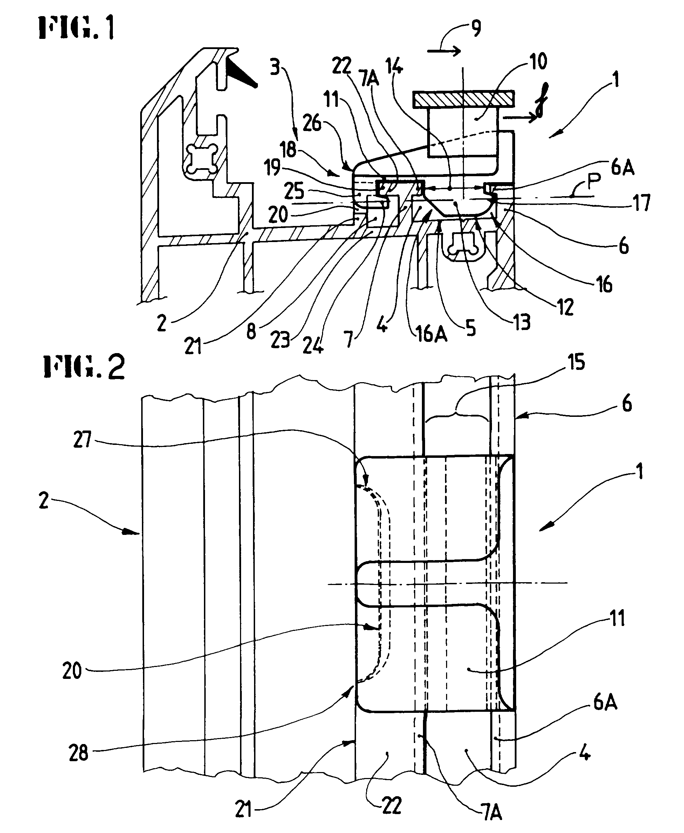

La présente invention s'attache au problème de la fixation d'un élément de ferrure 1, plus particulièrement une gâche telle que représentée dans les figures 1 et 2, sur un profilé 2, notamment en PVC, d'un cadre dormant ou d'un ouvrant d'une porte, fenêtre ou analogue.

De tels profilés 2 comportent, usuellement en feuillure 3, une rainure en « T » 4 dont le fond 5 est perpendiculaire au plan de la porte, fenêtre ou analogue. Cette rainure 4 est, par ailleurs, délimitée par des parois latérales 6, 7 qui, elles, sont disposées parallèlement à ce plan de la porte ou fenêtre et qui comportent, à leur extrémité libre, un retour 6A, 7A dirigé l'un en direction de l'autre. En outre, une telle rainure en « T » 4 jouxte avantageusement une chambre raidisseur 8 définie au niveau de ce profilé 2.

Quant à l'élément de ferrure 1, il doit être fixé sur un tel profilé 2 de manière à résister à certaines contraintes. Dans ce contexte, il doit, notamment, présenter une résistance à l'arrachement importante que ce profilé 2 soit du type métallique ou en PVC.

Ainsi, tel que représenté dans la figure 1, si cet élément de ferrure 1 se présente sous forme d'une gâche, celle-ci doit résister à une force f, qui lui serait appliquée par l'intermédiaire d'un organe de verrouillage 10 ayant été représenté sous forme d'un rouleau dans la figure 1.

Dans ce but, un tel élément de ferrure 1 comporte une embase 11 munie de moyens de fixation 12 destinés à coopérer avec la rainure en « T » 4.

Préférentiellement, ces moyens de fixation 12 se présentent sous forme d'un sabot 13 solidaire de la face inférieure de l'embase 11 et dont la largeur 14 est ajustée au passage 15 préservé au niveau de la rainure 4, entre les deux retours 6A, 7A. Ce sabot 13 comporte, en outre, sur l'un de ses côtés latéraux 16 en regard avec l'un de ces retours 6A, 7A de la rainure en « T » 4, un rebord formant redan 17 venant s'ancrer sous ledit retour 6A ou 7A.

Préférentiellement, sur son côté latéral 16A, ce sabot 13 est chanfreiné facilitant, finalement son emboîtement dans la rainure en « T » 4 tel que cela est exposé plus en avant dans la description.

Ces moyens de fixation 12 autorisant, finalement, un montage par clipage de l'élément de ferrure 1 sur le profilé 2, sont complétés par des moyens d'accrochage 18 destinés à coopérer avec un rebord d'accrochage 19 se situant en feuillure 3 du profilé 2 et s'étendant parallèlement au plan P donc au fond 5 de la rainure en « T » 4 et dans une direction opposée à cette dernière.

Préférentiellement, ledit rebord d'accrochage 19 est défini au travers d'un entaillage 20 réalisé dans la chambre raidisseur 8 jouxtant ladite rainure en « T » 4.

Si l'on se reporte à la figure 1, l'on observera, à ce propos, que cette chambre raidisseur 8 est délimitée, d'une part, par deux parois 7, 21 parallèles au plan de la porte, fenêtre ou analogue, dont l'une 7 est partagée avec ladite rainure en « T » 4 et, d'autre part, par deux parois perpendiculaires 22, 23 dont l'une 22 se situe, sensiblement, dans le prolongement du retour 7A de la paroi latérale 7 et dont l'autre 23 est, elle, dans le prolongement du fond 5 de la rainure en « T » 4.

Ainsi, l'entaillage 20 est, dans ce cas, réalisé, préférentiellement, en partie dans la paroi 21 et en partie dans la paroi perpendiculaire 22, celle-ci venant définir le rebord d'accrochage 19.

Quant aux moyens d'accrochage 18, ceux-ci se présentent sous forme d'un retour 24, parallèle à l'embase 11, se situant à l'extrémité libre d'un prolongement 25 s'étendant perpendiculairement et en bordure arrière 26 de cette embase 11. En définitive, en position montée de l'élément de ferrure 1, ledit retour 24 est destiné à se positionner sous le rebord d'ancrage 19 de manière à éviter le basculement de cet élément de ferrure 1 par rapport à la rainure en « T » 4.

A ce propos, l'on observera que le montage de l'élément de ferrure 1 sur le profilé 2 s'effectue de la manière suivante :
- on vient positionner le retour 24 sous le rebord d'accrochage 19 ;
- puis, par rotation autour d'un axe sensiblement matérialisé par ledit rebord d'accrochage, on repousse le sabot 13 dans la rainure en « T » 4 jusqu'à obtenir l'ancrage du rebord formant redan 17 sous le retour 6A.

Tel que cela est visible en figure 2, la longueur de l'entaillage 20 peut être déterminée de telle sorte que ses limites 27, 28 empêchent un mouvement de translation de l'élément de ferrure 1 par rapport au profilé 2. Tout particulièrement, la longueur de cet entaillage 20 est, préférentiellement, ajustée à la longueur du prolongement 25 s'étendant, perpendiculairement, en bordure arrière 26 sous l'embase 11.

Finalement, au regard de la description qui précède, l'on constate que, tout en autorisant un montage par clipage de l'élément de ferrure 1 sur le profilé 2, les moyens de fixation 12, complétés par les moyens d'accrochage 18, conduisent à une résistance à l'arrachement exceptionnelle de cet élément de ferrure 1 par rapport audit profilé 2, ceci quel que soit le matériau composant ce dernier ou encore ledit élément de ferrure 1.

## Revendications

1. Elément de ferrure d'articulation ou de verrouillage, plus particulièrement une gâche, pour porte ou fenêtre dont le dormant et/ou l'ouvrant sont constitués par un assemblage de profilés (2), notamment en PVC, comportant, en feuillure (3), une rainure en « T » (4), ledit élément de ferrure (1) comportant une embase (11) munie de moyens de fixation (12) dans une telle rainure en « T » (4), ces moyens de fixation (12) étant complétés par des moyens d'accrochage (18) destinés à coopérer avec un rebord d'accrochage (19) se situant en feuillure (3) d'un profilé (2), caractérisé par le fait que les moyens d'accrochage (18) se présentent sous forme d'un retour (24), parallèle à l'embase (11) et se situant à l'extrémité libre d'un prolongement (25) s'étendant perpendiculairement et en bordure arrière (26) de cette embase (11), en position montée de l'élément de ferrure (1) ledit retour (24) étant destiné à se positionner sous le rebord d'accrochage (19) s'étendant parallèlement au fond (5) de la rainure en « T » (4), dans une direction opposée à cette dernière.

2. Elément de ferrure selon la revendication 1, caractérisé par le fait que le rebord d'accrochage (19) est défini au travers d'un entaillage (20) réalisé dans une chambre raidisseur (8) en feuillure d'un profilé (2) et jouxtant ladite rainure en « T » (4).

3. Elément de ferrure selon les revendications 1 et 2 dont la chambre raidisseur (8) est délimitée, d'une part, par deux parois (7, 21) parallèles au plan de la porte, fenêtre ou analogue, dont l'une (7) est partagée avec ladite rainure en « T » (4), et, d'autre part, par deux parois perpendiculaires (22, 23) dont l'une (22) se situe, sensiblement, dans le prolongement du retour (7A) équipant l'extrémité libre de la paroi latérale (7) et dont l'autre (23) se situe dans le prolongement du fond (5) de la rainure en « T » (4), caractérisé par le fait que l'entaillage (20) est réalisé en partie dans la paroi (21) et en partie dans la paroi perpendiculaire (22) de cette chambre raidisseur (8), ladite paroi perpendiculaire (22) venant définir le rebord d'accrochage (19) .

4. Elément de ferrure selon la revendication 2 ou 3, caractérisé par le fait que la longueur de l'entaillage (20) est déterminée de telle sorte que ses limites (27, 28) empêchent un mouvement de translation de l'élément de ferrure (1) par rapport au profilé (2).

5. Elément de ferrure selon l'une quelconque des revendications 2 à 4, caractérisé par le fait que la longueur de cet entaillage (20) est ajustée à la longueur du prolongement (25) s'étendant, perpendiculairement, en bordure arrière (26) sous l'embase (11).

6. Elément de ferrure selon l'une quelconque des revendications précédentes, caractérisé par le fait que les moyens de fixation (12) sont conçus de manière à autoriser un montage par clipage de l'élément de ferrure (1) sur le profilé (2).

7. Elément de ferrure selon la revendication 6, caractérisé par le fait que les moyens de fixation (12) se présentent sous forme d'un sabot (13) solidaire de la face inférieure de l'embase (11) et dont la largeur (14) est ajustée au passage (15) préservé au niveau de la rainure en « T » (4), entre les deux retours (6A, 7A) équipant les extrémités libres des parois latérales (6, 7) de cette rainure en « T » (4), ce sabot (13) comportant, en outre, sur l'un de ses côtés latéraux (16) en regard avec l'un de ces retours (6A, 7A), un rebord formant redan (17) venant s'ancrer sous ledit retour (6A) ou (7A).

8. Elément de ferrure selon la revendication 7, caractérisé par le fait que sur son côté latéral (16A), opposé à celui (16) muni du rebord formant redan (17), ce sabot (13) est chanfreiné facilitant son emboîtement dans la rainure en « T » (4).

9. Elément de ferrure selon l'une quelconque des revendications précédentes, caractérisé par le fait qu'il est conçu en matière synthétique.

## Claims

1. Hinging or locking fitting, in particular a keeper, for a door or window the sash-frame and/or the leaf of which are formed of an assembly of profile bars (2), viz. made of PVC, including, in the fillister (3), a T-shaped groove (4), said fitting (1) including a base (11) provided with means (12) for fixing it in such a T-shaped groove (4), these fixing means (12) being completed with hooking-in means (18) aimed at cooperating with a hooking-in rim (19) located in the fillister (3) of a profile bar (2), characterised in that the hooking-in means (18) are in the form of a bend (24) parallel to the base (11) and located at the free end of an extension (25) extending perpendicularly to and at the rear edge (26) of this base (11), in the mounted position of the fitting (1), said bend (24) being aimed at being positioned under the hooking-in rim (19) extending parallel to the bottom (5) of the T-shaped groove (4) and in a direction away from the latter.

2. Fitting according to claim 1, characterised in that the hooking-in rim (19) is defined through a notch (20) provided for in a stiffening chamber (8) in the fillister of a profile bar (2) and contiguous to said T-shaped groove (4).

3. Fitting according to claims 1 and 2, the stiffening chamber (8) of which is delimited, on the one hand, by two walls (7, 21) parallel to the plane of the door, window or the like, one (7) of which is shared with said T-shaped groove (4), and, on the other hand, by two perpendicular walls (22, 23), one (22) of which is located substantially in the extension of the bend (7A) of the sidewall (7) and the other one (23) of which is located in the extension of the bottom (5) of the T-shaped groove (4), characterised in that the notch (20) is provided for partially in the wall (21) and partially in the perpendicular wall (22) of said stiffening chamber (8), said perpendicular wall (22) defining the hooking-in rim (19).

4. Fitting according to claim 2 or 3, characterised in that the length of the notch (20) is so determined that its limits (27, 28) impede a translation motion of the fitting (1) with respect to the profile (2).

5. Fitting according to any of claims 2 to 4, characterised in that the length of this notch (20) is adjusted to the length of the extension (25) extending perpendicularly, at the rear edge (26), under the base (11).

6. Fitting according to any of the preceding claims, characterised in that the fixing means (12) are so designed as to authorise a mounting through clicking the fitting (1) onto the profile bar (2).

7. Fitting according to claim 6, characterised in that the fixing means (12) are in the form of a shoe (13), integral with the lower face of the base (11), the width (14) of which is adjusted to the passageway (15) provided for at the level of the T-shaped groove (4), between both bends (6A, 7A) the free ends of the sidewalls (6, 7) of this T-shaped groove (4) are provided with, this shoe (13) including, in addition, at one of its lateral sides (16) in front of one of these bends (6A, 7A), a rim forming a step (17) that anchors itself under said bend (6A) or (7A).

8. Fitting according to claim 7, characterised in that, at its lateral side (16A), opposite the one (16) provided with the rim forming a step (17), this shoe (13) is bevelled, which facilitates its fitting into the T-shaped groove (4).

9. Fitting according to any of the preceding claims, characterised in that it is made of a synthetic material.

## Patentansprüche

1. Beschlagelement für die Anlenkung oder Verriegelung, insbesondere ein Schließstück, für eine Tür oder ein Fenster, bei der bzw. dem der Rahmen und/oder der Flügel aus einem Zusammenbau aus Profilen (2), insbesondere aus PVC, bestehen mit einer "T-Nut" (4) im Falz (3), wobei das Beschlagelement (1) einen Basisteil (11) aufweist, der mit Befestigungsmitteln (12) in einer solchen "T-Nut" (4) ausgestattet ist, wobei die Befestigungsmittel (12) durch Einhängungsmittel (18) vervollständigt sind, die dazu bestimmt sind, mit einem Einhängungsrücksprung (19) zusammenzuwirken, der sich im Falz (3) eines Profils (2) befindet, dadurch gekennzeichnet, daß die Einhängungsmittel (18) als parallel zum Basisteil (11) verlaufender Rücksprung (24) vorliegen und sich am freien Ende einer Verlängerung (25) befinden, die sich senkrecht und am hinteren Rand (26) dieses Basisteils (11) erstreckt, wobei in der montierten Stellung des Beschlagelements (1) der Rücksprung (24) dazu bestimmt ist, sich unter dem Einhängungsrücksprung (19) zu positionieren, der sich parallel zum Boden (5) der "T-Nut" (4) in einer zu dieser entgegengesetzten Richtung erstreckt.

2. Beschlagelement nach Anspruch 1, dadurch gekennzeichnet, daß der Einhängungsrücksprung (19) durch eine Einschneidung (20) definiert ist, die in einer Versteifungskammer (8) im Falz eines Profils (2) eingearbeitet ist und zu der "T-Nut" (4) führt.

3. Beschlagelement nach Anspruch 1 und 2, bei dem die Versteifungskammer (8) begrenzt wird einerseits durch zwei parallel zur Ebene der Tür, des Fensters oder dgl. verlaufende Wände (7, 21), von denen die eine (7) mit der "T-Nut" (4) geteilt wird, und andererseits durch zwei senkrechte Wände (22, 23), von denen sich die eine (22) im wesentlichen in der Verlängerung des Rücksprungs (7A) befindet, der das freie Ende der Seitenwand (7) ausstattet, und von denen die andere (23) sich in der Verlängerung des Bodens (5) der "T-Nut" (4) befindet, dadurch gekennzeichnet, daß die Einschneidung (20) teilweise in die Wand (21) und teilweise in die senkrechte Wand (22) dieser Versteifungskammer (8) eingearbeitet ist, wobei die senkrechte Wand (22) den Einhängungsrücksprung (19) bestimmt.

4. Beschlagelement nach Anspruch 2 oder 3, dadurch gekennzeichnet, daß die Länge der Einschneidung (20) derart bestimmt ist, daß ihre Grenzen (27, 28) eine Verschiebung des Beschlagelements (1) bezüglich des Profils (2) verhindern.

5. Beschlagelement nach einem der Ansprüche 2 bis 4, dadurch gekennzeichnet, daß die Länge der Einschneidung (20) an die Länge der Verlängerung (25) angepaßt ist, die sich senkrecht am hinteren Rand (26) unter dem Basisteil (11) erstreckt.

6. Beschlagelement nach einem der vorhergehenden Ansprüche, dadurch gekennzeichnet, daß die Befestigungsmittel (12) derart ausgelegt sind, daß sie eine Montage des Beschlagelements (1) auf dem Profil (2) durch Einrasten ermöglichen.

7. Beschlagelement nach Anspruch 6, dadurch gekennzeichnet, daß die Befestigungsmittel (12) in Form eines Schuhs (13) vorliegen, der mit der unteren Fläche des Basisteils (11) verbunden ist und dessen Breite (14) an den Durchtritt (15) angepaßt ist, der an der "T-Nut" (4) zwischen den beiden an den freien Enden der Seitenwände der "T-Nut" vorhandenen Rücksprüngen (6A, 7A) ausgebildet ist, wobei der Schuh (13) außerdem auf einem seiner seitlichen Ränder (16) gegenüber von einem seiner Rücksprünge (6A, 7A) einen Absatz (17) aufweist, der unter dem Rücksprung (6A oder 7A) verankerbar ist.

8. Beschlagelement nach Anspruch 7, dadurch gekennzeichnet, daß der Schuh (13) an seinem seitlichen Rand (16A), der demjenigen (16) gegenüberliegt, der mit dem den Absatz (17) bildenden Rücksprung versehen ist, abgeschrägt ist, wodurch sein Einführen in die "T-Nut" (4) erleichtert wird.

9. Beschlagelement nach einem der vorhergehenden Ansprüche, dadurch gekennzeichnet, daß es aus synthetischem Material besteht.
